# EUROPÄISCHE PATENTSCHRIFT

(11) **EP 3 048 395 B1**
(45) Veröffentlichungstag und Bekanntmachung des Hinweises auf die Patenterteilung: **01.12.2021**
(21) Anmeldenummer: 15191588.1
(22) Anmeldetag: 27.10.2015
(51) Int. Cl.: F25D 23/06

(54) **VERFAHREN ZUR HERSTELLUNG EINES KÜHL- UND/ODER GEFRIERGERÄTS**
METHOD FOR PRODUCING A REFRIGERATION AND/OR FREEZER DEVICE
PROCEDE DE FABRICATION D'UN APPAREIL DE RÉFRIGÉRATION ET/OU DE CONGÉLATION

(30) Priorität: 22.01.2015 DE 102015000840; 24.06.2015 DE 102015008130
(43) Veröffentlichungstag der Anmeldung: 27.07.2016
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: Hiemeyer, Jochen, 97753 Karlstadt (DE); Freitag, Michael, 97082 Würzburg (DE); Kerstner, Martin, 97072 Würzburg (DE)
(74) Vertreter: Herrmann, Uwe

(56) Entgegenhaltungen:
- EP-A1- 0 619 230
- EP-A2- 0 862 032
- DE-U1- 9 204 365
- US-A- 2 989 156
- US-A- 5 076 984
- US-A- 6 109 712

## Beschreibung

Die vorliegende Erfindung betrifft ein Verfahren zur Herstellung eines Kühl- und/oder Gefriergeräts mit einem Vakuumdämmkörper. Vakuumdämmkörper kommen beispielsweise bei der Wärmedämmung in Kühl- bzw. Gefriergeräten zur Verwendung. Hierbei wird in dem Bereich zwischen dem Außenmantel des Gerätes und dem zu kühlenden Innenbehälter ein Vakuumdämmkörper angeordnet, um mittels des Prinzips der Vakuumwärmedämmung zwischen Außen- und Innenseite des zu dämmenden Gerätes eine ausreichend hohe Wärmedämmung zu erzielen.

Ein derartiger Vakuumdämmkörper ist beispielsweise aus der DE 10 2013 005 585 A1 bekannt. Der aus dieser Patentanmeldung bekannte Vakuumdämmkörper besteht aus einer diffusionsdichten, d.h. vakuumdichten Umhüllung, deren Oberfläche größer ist als die Oberfläche des Hüllkörpers, wie beispielsweise eines Innenbehälters, an dem die Umhüllung anliegt. So ist es beispielsweise möglich, vorspringende oder zurückversetzte Konturen des Hüllkörpers in der Umhüllung abbilden zu können.

Darüber hinaus gibt es jedoch auch Vakuumdämmkörper, die auf die Nutzung eines Hüllkörpers verzichten, sich die Form also lediglich aufgrund des in einer diffusionsdichten Umhüllung befindlichen Kernmaterials ergibt.

Bei der Herstellung eines Vakuumdämmkörpers wird vorzugsweise eine Schüttung in die Umhüllung eingebracht. Um diese Einbringung der Schüttung sinnvoll durchführen zu können, ist in der Umhüllung eine Öffnung vorgesehen, die im Nachgang zur Befüllung vakuumdicht verschlossen werden muss.

Problematisch erweist sich in diesem Zusammenhang, dass sich die eingebrachte Schüttung nicht in einer zufriedenstellenden homogenen Art und Weise verteilt. Falls die Schüttung, die typischerweise ein Perlit ist, vor Beginn des Evakuiervorgangs nicht in allen Bereichen des Hohlraums in annähernd gleicher Dichte vorliegt, führt dies dazu, dass punktuell in einem Bereich geringerer Dichte ein größerer Schrumpf beim Evakuiervorgang stattfindet. Dies bedingt eine ungewollte Abweichung einer beabsichtigten Formkontur des Vakuumdämmkörpers in diesem Bereich. US 6 109 712 A offenbart ein Verfahren zur Herstellung eines Kühl- und/oder Gefriergeräts mit einem Vakuumdämmkörper wobei das Füllmaterial direkt in einen Zwischenraum zwischen der metallischen Außenverkleidung des Kühlgeräts und einer Barriere eingefüllt wird, wobei die Barriere ebenfalls metallisch und an die Außenverkleidung angeschweißt ist.

Der vorliegenden Erfindung liegt daher die Aufgabe zugrunde, ein Verfahren zur Herstellung eines Vakuumdämmkörpers vorzusehen, das ein Abweichen von einer gewünschten Sollform verhindert ohne dabei die Struktur der diffusionsdichten Umhüllung zu beschädigen.

Diese Aufgabe wird durch ein Verfahren mit den Merkmalen des Anspruchs 1 gelöst. Demnach ist vorgesehen, dass im Rahmen der Herstellung ein wenigstens abschnittsweise an einer Stützform anliegender Folienbeutel durch eine Befüllöffnung mit einem Kernmaterial befüllt wird, und die Stützform zusammen mit dem befüllten Folienbeutel bewegt wird. Vorzugsweise wird die Bewegung durch Rütteln oder auch durch andere Mittel, wie z.B. Ultraschall hervorgerufen.

Indem die Stützform in Vibration versetzt wird, wird dem Kernmaterial, das vorzugsweise in Form einer Schüttung vorliegt, besonders vorzugsweise in Form einer Perlitschüttung, Bewegungsenergie zugeführt. Dies führt dazu, dass sich das in dem Vakuumdämmkörper vorhandene Kernmaterial besonders gleichmäßig verteilt.

Durch die gleichmäßige Verteilung und Verdichtung wird erreicht, dass im Rahmen einer nachgelagerten Evakuierung des Folienbeutels eine größere Formstabilität des Folienbeutels erreicht wird als ohne die vorausgegangene Vibration der den Vakuumdämmkörper enthaltenden Stützform.

Als Kernmaterial wird jedes in dem Folienbeutel eingebrachte Material betrachtet. Vorzugsweise ist das Kernmaterial eine Schüttung, bevorzugterweise eine Perlitschüttung, die durch eine Befüllöffnung in den Folienbeutel eingebracht wird.

Vorzugsweise ist vorgesehen, dass nicht bereits ein vollständig versiegelter Folienbeutel an die Stützvorrichtung angelegt wird, sondern in einem ersten Schritt der leere Folienbeutel angelegt wird, und die Stützform eine Haltevorrichtung des Folienbeutels bildet, während diese mit einem Kernmaterial befüllt wird.

Da der Folienbeutel in der Stützform eingebracht ist, übertragen sich die Bewegungen, vorzugsweise die Vibrationsbewegung der Stützform auf den Folienbeutel und führen zu einer vorteilhaften Verteilung des eingebrachten Kernmaterials.

Nach einer weiteren Ausführungsform des Verfahrens wird bzw. werden in dem Verfahren ferner eine oder mehrere der Seiten des in der Stützform befindlichen Folienbeutels durch einen oder mehrere Stempel mit einem Pressdruck beaufschlagt.

Durch das Anlegen eines Pressdrucks ist es möglich, das in dem Folienbeutel vorhandene Kernmaterial bereits vor dem Beginn eines Evakuiervorgangs einer Dichte anzunähern, die der Dichte nach einer Evakuierung des Folienbeutels unter Druckbelastung mit atmosphärischem Druck entspricht.

Besonders im Zusammenspiel mit den durch das Bewegen bzw. Rütteln erzeugten Vibrationen führt der ausgeübte Pressdruck dazu, dass sich das typischerweise in Pulverform vorliegende Kernmaterial in einer besonders gleichmäßigen Art und Weise verteilt.

Ein Stempel kann hierbei ein beliebig ausgeformtes Element darstellen, mit dem ein Pressdruck auf den in der Stützform befindlichen Vakuumdämmkörper ausgeübt werden kann. Vorzugsweise ist ein Stempel Teil der Stützform und/oder bewegt sich von derselben Seite auf den Folienbeutel zu, von der der Folienbeutel befüllt worden ist.

In einer Ausführungsform ist vorgesehen, dass vor dem Schritt des Bewegens und ggf. der Beaufschlagung mit Pressdruck die Befüllöffnung geschlossen und der Folienbeutel luftdicht versiegelt wird.

In einem weiteren Ausführungsbeispiel des Verfahrens ist vorgesehen, dass der Pressdruck von derjenigen Seite des Folienbeutels wirkt, an der sich die Befüllöffnung befindet bzw. befand.

So ist es möglich, zuerst den Folienbeutel an die Stützform anzulegen, das Kernmaterial in das Hülleninnere einzuschütten, den Folienbeutel zu versiegeln und in einem nachgelagerten Verfahrensschritt die Anordnung zu rütteln oder anderweitig zu bewegen und gleichzeitig und/oder später mithilfe eines Stempels oder mehrere Stempel einen Pressdruck auszuüben. Dies bedingt hinsichtlich eines Fertigungsprozesses einen besonders effektiven Ablauf.

Nach einer weiteren bevorzugten Ausführungsform wird in dem Verfahren der durch den oder die Stempel ausgeübte Pressdruck von einem ersten Pressdruckwert auf einen zweiten Pressdruckwert erhöht, also der von dem Stempel oder den Stempeln ausgeübte Druck erhöht.

In einer Ausführungsform ist vorgesehen, dass der Pressdruck während des Bewegens schrittweise oder kontinuierlich erhöht wird.

Dies ist vorteilhaft, da ein mit einem geeigneten ersten Pressdruckwert aufliegender Stempel dazu führt, dass die durch das Bewegen, insbesondere das Rütteln der Stützform an das Kernmaterial weitergegebene Bewegungsenergie nicht durch ein Ausüben einer zu großen Pressdruckkraft beschränkt wird. Daher wird anfänglich ein möglichst großer Verteilungseffekt erzielt. Wird dann im weiteren Verlauf der Pressdruck erhöht, wird auch die Bewegungsfreiheit des typischerweise in Pulverform vorliegenden Kernmaterials durch die Erhöhung der Dichte eingeschränkt. Dies führt zu einer idealen Verteilung des Kernmaterials. Vorzugsweise ist der erste Pressdruckwert größer Null.

Nach einer weiteren Ausführungsform des vorliegenden Verfahrens wird der Stempel oder werden die Stempel gemeinsam mit dem befüllten Folienbeutel, vorzugsweise in einer identischen Weise wie die Stützform bewegt, wie beispielsweise gerüttelt.

Dies ist von Vorteil, da bei einem identischen Bewegungs- bzw. Rüttelvorgang von Stempel und Stützform die Abstände von Stempel zu Stützform auf ein Minimum reduziert werden können. Daher ist es möglich, einen besonders gleichmäßigen Druck über eine große Fläche auf den in der Stützform befindlichen Folienbeutel auszuüben.

Dabei ist selbstverständlich auch möglich, dass der Stempel oder die Stempel ein Teil der Stützform sind und zusammen mit dieser bewegt, wie beispielsweise gerüttelt werden.

In einer weiteren vorteilhaften Ausführungsform der Erfindung wird in dem Verfahren während und/oder nach dem Bewegen der befüllte Folienbeutel evakuiert, wobei insbesondere vorgesehen sein kann, dass ein Unterdruck an das Innere des Folienbeutels angelegt wird, während der oder die Stempel mit einem konstanten Pressdruck gegen den Folienbeutel nachgeführt wird bzw. werden.

Vorzugsweise wird der Unterdruck nach einem Abschluss des Verteilvorgangs des Kernmaterials innerhalb des Folienbeutels angelegt. Das Nachführen des Stempels oder der Stempel während dem Ausbilden des Unterdrucks ist in der Hinsicht vorteilhaft, da ein etwaiger weiterer Schrumpf, also ein etwaiges weiteres Nachgeben des Kernmaterials hierbei in die Richtung der Stempelbewegung forciert wird und der Schrumpf in dem Herstellungsprozess insgesamt kontrollierbarer ist.

Ferner wird durch das Anlegen des Unterdrucks die durch den Stempeldruck hervorgerufene Form in dem Kernmaterial des Folienbeutels fixiert. Daher kann vorgesehen sein, dass bei einem Anlegen eines Vakuums hier der oder die Stempel mit einem gleichbleibenden Pressdruck gegen den Folienbeutel nachgeführt werden. Dieser Druck sollte im Optimalfall bis zum Erreichen des gewünschten Vakuumniveaus aufrechterhalten werden. In einer Ausführungsform wird der Pressdruck während der Evakuierung des Folienbeutels schrittweise oder kontinuierlich erhöht, wobei vorgesehen sein kann, dass der Pressdruck während der Evakuierung des Folienbeutels höher ist als während des Bewegens.

In einer Ausführungsform wird während des Bewegens zwischen der Stützform und dem Folienbeutel ein Unterdruck angelegt wird, sodass der Folienbeutel an die Stützform angesaugt. Es kann vorgesehen sein, dass die Hülle des Folienbeutels durch Unterdruck an die Stützform angesaugt wird. Durch das Ansaugen der Außenhülle des Folienbeutels lassen sich Rüttelbewegungen oder sonstige Bewegungen der Stützform in einer besonders effektiven Art auf den Folienbeutel bzw. das darin befindliche Kernmaterial übertragen. Auch wird durch das Ansaugen der Hülle an die Stützform ein maximaler Freiraum für das typischerweise als Pulver vorliegende Kernmaterial geschaffen, um auch in engen Konturstellen eine gewünschte Dichte des Kernmaterials zu erzielen.

In einer Ausführungsform wird während und/oder nach dem Bewegen der zwischen der Stützform und dem Folienbeutel angelegte Unterdruck entspannt wird. Es kann vorgesehen sein, dass der zwischen der Stützform und dem Folienbeutel angelegte Unterdruck unmittelbar vor der Evakuierung oder gleichzeitig mit der Evakuierung des Folienbeutels entspannt wird.

In einer Ausführungsform ist vorgesehen, dass das Bewegen des Folienbeutels beendet wird, bevor der Folienbeutel evakuiert wird. Alternativ kann das Bewegen aber auch während oder nach der Evakuierung des Folienbeutels und/oder während oder nach Entspannung des Unterdrucks zwischen der Stützform und dem Folienbeutel fortgesetzt bzw. wieder aufgenommen werden.

In einer Ausführungsform wird der Körper während der Bewegung, d.h. während des Verteilvorgangs des Füllmaterials an der starrwandigen Stützform fixiert. Die Fixierung kann beispielsweise durch ein Klemmen erfolgen, wobei vorgesehen sein kann, dass der Vakuumdämmkörper zwischen zwei Wände der starrwandigen Stützform geklemmt werden kann.

Erfindungsgemäß ist es vorgesehen, dass sich die Stützform teilweise aus einer Pressform, welche keinen Teil eines entstehenden Behältnisses darstellt, und teilweise aus einem Teil des entstehenden Innenbehälter zusammensetzt.

Typischerweise ist die Hülle des Folienbeutels eine diffusionsdichte Umhüllung, mittels derer der Gaseintrag in dem Folienbeutel so stark reduziert ist, dass der gaseintragbedingte Anstieg in der Wärmeleitfähigkeit des entstehenden Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung < 10⁻⁵ mbar * l / s *m² und besonders bevorzugt < 10⁻⁶ mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10⁻² mbar * l / s * m² und besonders bevorzugt im Bereich von < 10⁻³ mbar * I / s * m² (gemessen nach ASTM F-1249-90). Vorzugsweise werden durch diese geringen Gasdurchgangsraten die vorgenannten geringen Anstiege der Wärmeleitfähigkeit erreicht.

Bei den oben genannten Werten handelt es sich um exemplarische, bevorzugte Angaben, die die Erfindung nicht beschränken.

In einer Ausführungsform ist vorgesehen, dass es sich bei dem erfindungsgemäßen Behältnis bzw. bei dem erfindungsgemäß hergestellten Behältnis um ein Kühl- und/oder Gefriergerät, insbesondere um ein Haushaltsgerät bzw. ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner sind auch Kühl- und/oder Gefriertruhen von der Erfindung umfasst. Die erfindungsgemäßen Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

Vorzugsweise ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Vorteil der Verwendung von thermoelektrischen Wärmepumpen ist in dieser Ausführungsform, dass die komplette EMV-Problematik lediglich am Netzteil auftritt.

Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf. Die Außenabmessungen des Behälters bzw. Gerätes liegen vorzugsweise im Bereich bis 1 m hinsichtlich der Höhe, der Breite und der Tiefe.

Das Vollvakuumsystem kann so erhalten werden, dass eine Umhüllung aus einer gasdichten Folie mit einem Kernmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle, beispielsweise eines Evakuierungsstutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

Weitere Einzelheiten und Vorteile der vorliegenden Erfindung ergeben sich aus den nachfolgenden Ausführungsbeispielen.

Ein erstes Ausführungsbeispiel betrifft die Herstellung eines Gerätekorpus einer Kühltruhe mit einer Vollvakuumdämmung.

Nach Bereitstellung des Innenbehälters in bekannter Weise wird dieser auf den Kopf gestellt und von der geschlossenen Seite - also von oben - her mit einem Folienbeutel überzogen. Dies erfolgt, indem ein Folienbeutel, dessen Tiefe im ausgezogenen Zustand wenigstens doppelt so groß ist wie die Tiefe des Innenbehälters, so über den Innenbehälter gestülpt wird, dass der Beutel an allen Außenwänden des Innenbehälters im wesentlichen vollflächig anliegt und entlang der Öffnung des Innenbehälters nach oben umgestülpt ist, sodass alle Seitenwände des Innenbehälters im wesentlichen vollflächig von einem nach oben offenen Graben umgeben sind.

Diese Anordnung wird in eine Pressform eingebracht, welche an den Umbügen und den nach außen zeigenden Seitenflächen des Beutels anliegt. Anschließend wird zwischen der Pressform und dem Folienbeutel ein Unterdruck angelegt, sodass der Folienbeutel an die Pressform angesaugt wird. Die Pressform weist zu diesem Zweck kleine über die Fläche der Pressform verteilte Evakuierungsöffnungen auf. Das Vakuum pflanzt sich über Falten am Folienbeutel auch in den Bereich des Innenbehälters fort, sodass auch zwischen dem Innenbehälter und dem Folienbeutel ein Unterdruck entsteht und der Folienbeutel auch an den Innenbehälter angesaugt wird.

Die Pressform hat bereits die Form und Dimension eines Außenbehälters, der später den Folienbeutel bzw. den daraus entstehenden Vakuumdämmkörper umgeben soll.

Anschließend wird der Folienbeutel einschließlich des nach oben offenen Grabens mit einem Füllmaterial gefüllt, bis der Boden des Innenbehälters vollständig und mit bestimmter Schichtdicke überdeckt ist. Die nach oben zeigende Öffnung dient dabei als Befüllöffnung.

Diese Befüllöffnung wird dann durch Aufschweißen einer Abdeckfolie geschlossen. Anschließend werden mehrere Stempel angesetzt, die einen Pressdruck von dort ausüben können, wo zuvor die Befüllöffnung war und wo der Zugang nicht durch die Pressform oder den Innenbehälter versperrt ist.

Der versiegelte Folienbeutel ist in diesem Zustand also vollumfänglich in einer starren Stützform eingeschlossen, die sich aus dem Innenbehälter, der Pressform und den Stempeln zusammensetzt.

Anschließend wird das resultierende Gesamtsystem mit einer Frequenz von beispielsweise zwischen 10 und 100 Hz und einer Amplitude von zwischen 1 und 100 mm gerüttelt, um die Schüttung gleichmäßig zu verdichten. Nach Ablauf einer gewissen Zeitspanne, beispielsweise von weniger als 30 Sekunden nach Ansetzen des Rüttelns werden zudem die Stempel aktiviert, um eine Presskraft auf den Folienbeutel auszuüben. Diese Presskraft wird im weiteren Verlauf des Verfahrens fortlaufend erhöht.

Nach einer vorbestimmten Zeitdauer oder nach Erreichen einer anderen Zielvorgabe, beispielsweise eines Zielwiderstandes der Stempel bei einer gegebenen translatorischen Position, wird der zwischen der Pressform und dem Folienbeutel angelegte Unterdruck entspannt und der Folienbeutel anhand eines Evakuierstutzens evakuiert. Während der Evakuierung wird die durch die Stempel ausgeübte Presskraft weiter erhöht und das Rütteln fortgesetzt.

Sobald ein vorgegebenes Vakuum im Inneren des Folienbeutels erreicht wurde, wird das Rütteln eingestellt, der Pressdruck entspannt und der Innenbehälter mit dem umlaufenden Folienbeutel wird aus der Maschine umfassen die Pressform und die Stempel entnommen. Das entstehende Zwischenprodukt, d.h. der Innenbehälter mit dem Folienbeutel wird in weiteren Produktionsschritten verarbeitet.

Ein weiteres Beispiel, das nicht Teil dieser Erfindung ist betrifft die Herstellung einer Türe eines Kühl- und/oder Gefriergerätes mit einer Vollvakuumdämmung.

Nach Bereitstellung eines nach oben hin offenen Folienbeutels, dessen Abmessungen im Wesentlichen den Abmessungen der Türe entsprechen, wird dieser in eine Pressform eingebracht, welche an allen fünf geschlossenen Seiten des Beutels anliegt. Anschließend wird zwischen der Pressform und dem Folienbeutel ein Unterdruck angelegt, sodass der Folienbeutel an die Pressform angesaugt wird. Die Pressform weist zu diesem Zweck kleine über die Fläche der Pressform verteilte Evakuierungsöffnungen auf. Die Pressform hat bereits die Form und Dimension einer Außen- und Innenschale, welche später den Folienbeutel bzw. den daraus entstehenden Vakuumdämmkörper in der fertigen Türe einschließen sollen.

Anschließend wird der Folienbeutel durch die oben angeordnete Befüllöffnung mit einem Füllmaterial gefüllt, bis der Beutel vollständig gefüllt ist. Die Befüllöffnung wird dann durch Verschweißen der gegenüberliegenden Deckflächen geschlossen. Anschließend wird von oben ein Stempel angesetzt, der einen Pressdruck von oben ausüben kann.

Der versiegelte Folienbeutel ist in diesem Zustand also vollumfänglich in einer starren Stützform eingeschlossen, die sich aus der Pressform und dem Stempel zusammensetzt.

Anschließend wird das resultierende Gesamtsystem mit einer Frequenz von beispielsweise zwischen 10 und 100 Hz und einer Amplitude von zwischen 1 und 100 mm gerüttelt, um die Schüttung gleichmäßig zu verdichten. Nach Ablauf einer gewissen Zeitspanne, beispielsweise von weniger als 30 Sekunden nach Ansetzen des Rüttelns wird zudem der Stempel aktiviert, um eine Presskraft von oben auf den Folienbeutel auszuüben. Diese Presskraft wird im weiteren Verlauf des Verfahrens fortlaufend erhöht.

Nach einer vorbestimmten Zeitdauer oder nach Erreichen einer anderen Zielvorgabe, beispielsweise eines Zielwiderstandes der Stempel bei einer gegebenen translatorischen Position, wird der zwischen der Pressform und dem Folienbeutel angelegte Unterdruck entspannt und der Folienbeutel anhand eines Evakuierstutzens evakuiert. Während der Evakuierung wird die durch die Stempel ausgeübte Presskraft weiter erhöht und das Rütteln fortgesetzt.

Sobald ein vorgegebenes Vakuum im Inneren des Folienbeutels erreicht wurde, wird das Rütteln eingestellt, der Pressdruck entspannt und der Folienbeutel wird aus der Maschine umfassend die Pressform und den Stempel, entnommen. Das entstehende Zwischenprodukt, d.h. der evakuierte und vorgeformte Folienbeutel wird in weiteren Produktionsschritten verarbeitet.

## Patentansprüche

1. Verfahren zur Herstellung eines Kühl- und/oder Gefriergeräts, das einen Innenbehälter sowie einen Vakuumdämmkörper in Form eines mit einem Kernmaterial gefüllten und evakuierten Folienbeutels als Dämmkörper aufweist, wobei der Folienbeutel an eine Stützform angelegt wird, die durch eine Kombination aus dem Innenbehälter des entstehenden Kühl- und/oder Gefriergerätes und einer Pressform gebildet wird, wobei der so an der Stützform anliegende Folienbeutel durch eine Befüllöffnung mit einem Kernmaterial befüllt wird, und wobei die Stützform zusammen mit dem befüllten Folienbeutel gerüttelt wird,.

2. Verfahren nach Anspruch 1, wobei in dem Verfahren ferner eine oder mehrere der Seiten des in der Stützform befindlichen befüllten Folienbeutels während und ggf. auch nach dem Rütteln durch einen oder mehrere Stempel mit einem Pressdruck beaufschlagt wird bzw. werden.

3. Verfahren nach einem der vorhergehenden Ansprüche, wobei vor dem Rütteln die Befüllöffnung geschlossen und der Folienbeutel luftdicht versiegelt wird.

4. Verfahren nach einem der Ansprüche 2 bis 3, wobei der Pressdruck von der Seite wirkt, an der sich die Befüllöffnung befindet bzw. befand.

5. Verfahren nach einem der Ansprüche 2 bis 4, wobei der durch den Stempel ausgeübte Pressdruck von einem ersten Pressdruckwert auf einen zweiten Pressdruckwert steigt, und vorzugsweise während des Rüttelns schrittweise oder kontinuierlich erhöht wird.

6. Verfahren nach einem der Ansprüche 2 bis 5, wobei der oder die Stempel gemeinsam mit dem befüllten Folienbeutel gerüttelt werden.

7. Verfahren nach einem der vorhergehenden Ansprüche, wobei während des Rüttelns zwischen der Stützform und dem Folienbeutel ein Unterdruck angelegt wird, sodass der Folienbeutel an die Stützform angesaugt wird.

8. Verfahren nach Anspruch 7, **dadurch gekennzeichnet, dass** der zwischen der Stützform und dem Folienbeutel angelegte Unterdruck nach dem Rütteln entspannt wird.

9. Verfahren nach einem der vorhergehenden Ansprüche, wobei der befüllte Folienbeutel nach dem Rütteln evakuiert wird.

10. Verfahren nach Anspruch 9, **dadurch gekennzeichnet, dass** der Pressdruck während der Evakuierung des Folienbeutels schrittweise oder kontinuierlich erhöht wird, wobei vorgesehen sein kann, dass der Pressdruck während der Evakuierung des Folienbeutels höher ist als während des Rüttelns.

11. Verfahren nach einem der vorhergehenden Ansprüche, **dadurch gekennzeichnet, dass** es sich bei dem Kernmaterial um Perlit handelt.

## Claims

1. Method for manufacturing a refrigerator and/or freezer comprising an inner container as well as a vacuum insulating body in the form of an evacuated film pouch filled with a core material and acting as an insulating body, wherein the film pouch is placed on a supporting mould, which is formed by a combination of the inner container of the resulting refrigerator and/or freezer and a press mould, wherein the film pouch resting against the supporting mould in such a way is filled with a core material through a filler opening, and wherein the supporting mould is shaken together with the filled film pouch.

2. Method according to claim 1, wherein, further in said method, one or multiple of the sides of the film pouch located in the supporting mould is or are, during and optionally after the shaking process, subjected to a pressing pressure by means of one or multiple stamps.

3. Method according to one of the preceding claims, wherein, before the shaking process, the filler opening is closed, and the film pouch is sealed in an airtight manner.

4. Method according to one of claims 2 or 3, wherein the pressing pressure acts from the side on which the filler opening is or was located.

5. Method according to one of claims 2 to 4, wherein the pressing pressure applied by means of the stamp increases from a first pressing pressure level to a second pressing pressure level and preferably increases incrementally or continuously during the shaking process.

6. Method according to one of claims 2 to 5, wherein the stamp(s) is/are shaken together with the filled film pouch.

7. Method according to one of the preceding claims, wherein, during the shaking process, a negative pressure is applied such that the film pouch is drawn against the supporting mould.

8. Method according to claim 7, **characterized in that** the negative pressure applied between the supporting mould and the film pouch is relieved after the shaking process.

9. Method according to one of the preceding claims, wherein the filled film pouch is evacuated after the shaking process.

10. Method according to claim 9, **characterized in that** the pressing pressure is incrementally or continuously increased during the evacuation of the film pouch, wherein it can be provided that the pressing pressure is higher during the evacuation of the film pouch than during the shaking process.

11. Method according to one of the preceding claims, **characterized in that** the core material is perlite.

## Revendications

1. Procédé de fabrication d'un appareil de réfrigération et/ou de congélation, qui présente en tant que corps isolants un contenant intérieur ainsi qu'un corps isolant sous vide sous la forme d'un sachet en film rempli d'un matériau de noyau et mis sous vide, dans lequel le sachet en film est placé sur un moule de soutien qui est formé par une combinaison composée du contenant intérieur de l'appareil de réfrigération et/ou de congélation en cours de production et d'un moule de pressage, dans lequel le sachet en film reposant ainsi sur le moule de soutien est rempli avec un matériau de noyau par une ouverture de remplissage, et dans lequel le moule de soutien est secoué conjointement avec le sachet en film rempli.

2. Procédé selon la revendication 1, dans lequel en outre un ou plusieurs des côtés du sachet en film rempli se trouvant dans le moule de soutien est ou sont soumis à l'action d'une pression de pressage pendant et éventuellement également après le secouage par un ou plusieurs poinçons dans le procédé.

3. Procédé selon l'une quelconque des revendications précédentes, dans lequel l'ouverture de remplissage est fermée et le sachet en film est scellé de manière étanche à l'air avant le secouage.

4. Procédé selon l'une quelconque des revendications 2 à 3, dans lequel la pression de pressage agit depuis le côté, sur lequel l'ouverture de remplissage se trouve ou se trouvait.

5. Procédé selon l'une quelconque des revendications 2 à 4, dans lequel la pression de pressage exercée par le poinçon augmente depuis une première valeur de pression de pressage à une deuxième valeur de pression de pressage, et est augmentée de préférence progressivement ou en continu au cours du secouage.

6. Procédé selon l'une quelconque des revendications 2 à 5, dans lequel le ou les poinçons sont secoués conjointement avec le sachet en film rempli.

7. Procédé selon l'une quelconque des revendications précédentes, dans lequel une dépression est appliquée au cours du secouage entre le moule de soutien et le sachet en film de sorte que le sachet en film est aspiré sur le moule de soutien.

8. Procédé selon la revendication 7, **caractérisé en ce que** la dépression appliquée entre le moule de soutien et le sachet en film est relâchée après le secouage.

9. Procédé selon l'une quelconque des revendications précédentes, dans lequel le sachet en film rempli est mis sous vide après le secouage.

10. Procédé selon la revendication 9, **caractérisé en ce que** la pression de pressage est augmentée progressivement ou en continu au cours de la mise sous vide du sachet en film, dans lequel il peut être prévu que la pression de pressage est plus élevée pendant la mise sous vide du sachet en film qu'au cours du secouage.

11. Procédé selon l'une quelconque des revendications précédentes, **caractérisé en ce que** le matériau de noyau est de la perlite.
